# EUROPÄISCHE PATENTANMELDUNG

(11) **EP 1 990 116 A1**
(43) Veröffentlichungstag der Anmeldung: **12.11.2008**
(21) Anmeldenummer: 08008751.3
(22) Anmeldetag: 09.05.2008
(51) Int. Cl.: B23D 45/10, B27G 19/10, B23D 45/06

(54) **Holzbearbeitungsmachine, inbesondere Kreissäge**

(30) Priorität: 11.05.2007 DE 102007022757
(71) Anmelder: Otto Martin Maschinenbau GmbH & Co. KG, 87724 Ottobeuren (DE)
(72) Erfinder: Maritn, Peter, 87724 Ottobeuren (DE)
(74) Vertreter: Schulz, Manfred

(57) **Zusammenfassung**

Die Erfindung betrifft eine Holzbearbeitungsmaschine, insbesondere Kreissäge, mit wenigstens einem Bearbeitungswerkzeug (3) und wenigstens einem Vorritzwerkzeug (9), wobei Bearbeitungswerkzeug (3) und Vorritzwerkzeug (9) gegenüber einer Auflageebene für das zu bearbeitende Werkstück verschwenkbar sind.

Die Erfindung zeichnet sich dadurch aus, dass Bearbeitungswerkzeug (3) und Vorritzwerkzeug (9) unabhängig voneinander gelagert sind.

## Beschreibung

Die Erfindung betrifft eine Holzbearbeitungsmaschine, insbesondere Kreissäge mit wenigstens einem Bearbeitungswerkzeug und wenigstens einem Vorritzwerkzeug, wobei Bearbeitungswerkzeug und Vorritzwerkzeug gegenüber einer Auflageebene für das zu bearbeitende Werkstück verschwenkbar sind.

Es sind Holzbearbeitungsmaschinen mit stehendem oder verfahrbarem Bearbeitungswerkzeug bekannt, die ein Vorritzaggregat zum Erzeugen einer Vorritznut, beispielsweise an einer Kreissäge, aufweisen. Dabei können die bekannten Kreissägen des Standes der Technik ein auf einem Tisch aufliegendes oder horizontal bewegtes Werkstück schneiden. Das Vorritzaggregat beziehungsweise Vorritzwerkzeug dient dazu, ein auf dem Tisch aufliegendes zu sägendes Werkstück vor dem durchtrennenden Schnitt auf derjenigen Seite einzuritzen, auf der beim durchtrennenden Schnitt das Hauptsägeblatt austritt. Die dabei entstehenden Vorritz-Nute ist geringfügig breiter als die Schnittfuge, die beim durchtrennenden Schnitt entsteht und meist 0,5 bis 2 mm tief ist. Die Drehrichtung der Vorritzsägeblätter ist derjenigen des Hauptsägeblattes meist entgegengesetzt. Durch diesen Ritzschnitt wird ein Ausreißen, insbesondere beschichteter Platten, beim durchtrennenden Sägeschnitt auf der Seite des austretenden Hauptsägeblattes vermieden. Die Erfindung wird hier am Beispiel einer Kreissäge exemplarisch beschrieben. Es ist jedoch auch möglich, andere Holzbearbeitungsmaschinen mit der Lösung nach der Erfindung zu versehen.

Üblicherweise ist nach dem Stand der Technik das Bearbeitungswerkzeug an einem Hauptsägeaggregat vorgesehen, welches gemeinsam mit dem in Vorschubrichtung vor dem Hauptsägeaggregat angeordneten Vorritzwerkzeug an einer schwenkbaren Konsole aufgebaut ist. Die Lage der Schwenkachse genau in der Tischebene erspart dabei umständliche Verrechnungen der zu sägenden Abstände nach Verschwenkvorgängen.

Die oben beschriebene kombinierte Bauweise bewirkt zwar einen einfachen Aufbau der Schwenkvorrichtung. Dieser Aufbau erzwingt allerdings bei sehr hohen Anforderungen an die genaue Lage der Schwenkachse einen großen Aufwand bei der Einstellung der die gesamte Anordnung tragenden Lager zueinander.

Ausgehend von diesem Stand der Technik ist es Aufgabe der Erfindung, eine Holzbearbeitungsmaschine vorzuschlagen, die günstiger herzustellen ist.

Die Aufgabe der Erfindung wird gelöst durch eine Holzbearbeitungsmaschine, insbesondere Kreissäge mit wenigstens einem Bearbeitungswerkzeug und wenigstens einem Vorritzwerkzeug, wobei Bearbeitungswerkzeug und Vorritzwerkzeug gegenüber einer Auflageebene für das zu bearbeitende Werkstück verschwenkbar sind, die sich dadurch auszeichnet, dass Bearbeitungswerkzeug und Vorritzwerkzeug unabhängig voneinander gelagert sind. Durch die unabhängige Lagerung von Bearbeitungswerkzeug und Vorritzwerkzeug ist es jetzt möglich den im Stand der Technik sich als negativ darstellenden hohen Aufwand der Lager von Bearbeitungswerkzeug und Vorritzwerkzeug zueinander erheblich zu reduzieren.

Der erfindungsgemäße Vorschlag zielt darauf ab, die Lagerung des Bearbeitungswerkzeuges und die Lagerung des Vorritzwerkzeuges voneinander zu trennen. Daraus resultieren kleinere Baugruppen, die zu lagern sind, deren Lager entweder einfacher zueinander ausrichtbar sind, oder aber Baugruppen, die nur mit einem Lager auskommen.

Die Verschwenkung von Vorritzwerkzeug und Bearbeitungswerkzeug kann dabei in unterschiedlicher Form aufeinander abgestimmt werden.

Die einfachste Möglichkeit einer solchen unabhängigen, jedoch kombinierbaren Verschwenkbarkeit von Bearbeitungswerkzeug und Vorritzwerkzeug ist durch eine Kupplung angegeben. Durch die Kupplung wird erreicht, dass Bearbeitungswerkzeug und Vorritzwerkzeug gleichzeitig und im gleichen Winkel gegenüber der Verschwenkachse verschwenkt werden. Dabei ist es nach der Erfindung entsprechend einer sehr einfachen Möglichkeit vorgesehen, die Kupplung derart auszugestalten, dass ein Verschwenken des Bearbeitungswerkzeuges auf das Vorritzwerkzeug übertragen wird. Die Probleme des Standes der Technik, wie weiter vorn beschrieben, werden durch die Lösung, wonach Bearbeitungswerkzeug und Vorritzwerkzeug unabhängig voneinander gelagert sind, komplett vermieden.

Eine durch die Kupplung eventuell bedingte leichte Abweichung des Verschwenkwinkels des Vorritzwerkzeuges vom Verschwenkwinkel des Bearbeitungswerkzeuges kann akzeptiert werden, da sie sich aufgrund der geringen Eindringtiefe des Vorritzwerkzeuges nicht auf die Qualität der Schnittfuge auswirkt.

Die Erfindung ist bei Holzbearbeitungsmaschinen einsetzbar, welche entweder ein stehendes (aber natürlich rotierendes beziehungsweise bearbeitendes) Werkzeug und ein hierzu relativ verschiebliches beziehungsweise bewegtes Werkstück aufweisen, oder aber, bei welchen das Werkzeug verfahrbar gelagert ist und ein im wesentlichen feststehendes Werkstück schneidet. Grundsätzlich ist natürlich auch eine Mischung der vorgenannten beiden Varianten von der Erfindung ebenfalls umfaßt. Soweit also die Erfindung nur in der Variante einer Tischkreissäge beschrieben ist, erstreckt sich diese Beschreibung nicht nur auf dieses konkrete Ausführungsbeispiel, sondern ist analog auch auf die anderen Anwendungsfälle übertragbar und von der Erfindung umfaßt.

Nach einer Variante der Erfindung ist es von Vorteil, wenn Bearbeitungswerkzeug und Vorritzwerkzeug je eine eigene Verschwenkeinrichtung aufweisen. Durch die eigene Verschwenkeinrichtung wird dieser Lageraufwand, wie vorher beschrieben, nicht in dem Maße notwendig, wie im Stand der Technik, wo aufgrund der Dimensionen durch die Anordnung von Bearbeitungswerkzeug und Vorritzwerkzeug auf einem einzigen Aggregat der Lageraufwand erheblich ist. Zudem ist jeweils eine einseitige Lagerung möglich, was im Stand der Technik aufgrund der hohen Anforderungen an die Lagerung nicht möglich war.

Wie bereits weiter oben erwähnt, ist es nach der Erfindung vorgesehen, dass die Verschwenkeinrichtung des Bearbeitungswerkzeuges und des Vorritzwerkzeuges miteinander gekoppelt sind. Damit wird die Verschwenkbewegung des Bearbeitungswerkzeuges auf das Vorritzwerkzeug analog übertragen, sodass beide immer in dem gleichen Winkel bezüglich der Bearbeitungslinie beziehungsweise bezüglich des zu bearbeitenden Werkstückes stehen.

Eine Weiterbildung der Erfindung zeichnet sich dadurch aus, dass das Bearbeitungswerkzeug an einem Hauptaggregat und das Vorritzwerkzeug an einem Vorritzträger vorgesehen sind. Damit ist es möglich, alle notwendigen Maschinenelemente, die zum Betreiben des Bearbeitungswerkzeuges notwendig sind, beispielsweise an dem Hauptaggregat vorzusehen. An dem Vorritzträger werden alle für das Betreiben notwendige Maschinenelemente des Vorritzwerkzeuges vorgesehen. Selbstverständlich ist auch eine getrennte Lagerung des Antriebs, beispielsweise unabhängig vom Hauptaggregat möglich, wenn eine entsprechende Kraftübertragungseinrichtung, die an unterschiedliche Winkellagen anpassbar ist, mit vorgesehen wird. Bei der vorgeschlagenen Lösung der Erfindung ist in einer Variante für das Bearbeitungswerkzeug und das Vorritzwerkzeug je ein eigener Antriebsmotor vorgesehen. Die Erfindung ist allerdings auf eine solche Ausführungsform nicht eingeschränkt.

Eine Holzbearbeitungsmaschine nach der Erfindung zeichnet sich in einer Variante dadurch aus, dass das Hauptaggregat und der Vorritzträger unabhängig voneinander aufgehängt sind. Dies spart, wie bereits bei den vorhergehenden Ausführungsformen und Varianten der Erfindung, den Aufwand für die genaue Lagerung der Schwenkachse und der Einstellung der Lager zueinander ebenfalls ein und ermöglicht auch eine einseitige Lagerung, zumindest für das Hauptaggregat.

Die Erfindung zeichnet sich auch dadurch aus, dass der Vorritzträger und das Hauptaggregat zur Übertragung von Verstellbeziehungsweise Verschwenkbewegungen vorzugsweise über eine Kupplung miteinander gekoppelt sind. Alternativ ist nach der Erfindung auch vorgesehen, daß zur Übertragung der Verstellbeziehungsweise Verschwenkbewegung eine Kupplung auch zwischen dem Bearbeitungswerkzeug und dem Vorritzwerkzeug vorgesehen ist, beziehungsweise das Bearbeitungswerkzeug und das Vorritzwerkzeug über eine Kupplung miteinander gekoppelt sind. In dieser Ausführungsform sind dann die entsprechenden Hauptaggregate beziehungsweise Vorritzträger für Bearbeitungswerkzeug und Vorritzwerkzeug miteinander gekoppelt. Dabei sind mechanische Kopplungen von der Erfindung ebenso umfasst, wie beispielsweise elektronische Kopplungen über vorzugsweise synchronisierte Verstellmotoren.

Erfindungsgemäß wurde gefunden, dass es von Vorteil ist, wenn der Vorritzträger und das Hauptaggregat in einem Ständer, Maschinengestell oder dergleichen angeordnet sind.

Es ist weiterhin vorgesehen, das Hauptaggregat an einer Schwenkvorrichtung, vorzugsweise an einer Schwenkkonsole anzuordnen. Die Ausführungsform eines Hauptaggregats als Konsole ist dabei eine sehr günstige Variante, da sich eine solche Konsole technisch sehr elegant lösen lässt und es auch möglich ist, an dem Hauptaggregat das Bearbeitungswerkzeug entsprechend zu lagern und anzutreiben.

Von Vorteil ist es dabei, wenn die Schwenkkonsole in dem Ständer in wenigstens einer Schwenkführung angeordnet ist. Eine solche Schwenkführung kann als Nut oder als Segmentführung ausgeführt sein. Die Erfindung ist hier nicht auf eine besondere Art der Führung für den Schwenkvorgang eingeschränkt.

Das Hauptaggregat ist nach der Erfindung um eine in der Oberfläche der Auflageebene liegende Achse schwenkbar. Dies hat den Vorteil, dass bei Verstellung des Hauptaggregates das Bearbeitungswerkzeug immer bezüglich dieser Verschwenkachse D verschwenkt wird, wodurch beispielsweise die Verrechnung beziehungsweise Berechnung von entsprechenden Maßabweichungen erleichtert wird. Erfindungsgemäß ist die Auflageebene durch einen Maschinentisch, oder eine Auflage für das Werkstück angegeben.

Des Weiteren ist für den Antrieb des Bearbeitungswerkzeuges ein Antriebsmotor vorgesehen. Bevorzugt sind dabei selbstverständlich Elektromotoren. Es kann sich dabei um einen Motor handeln, der als Direktantrieb sozusagen auf seiner Welle das Bearbeitungswerkzeug trägt. Es ist selbstverständlich auch möglich, den Motor über entsprechende Antriebsaggregate oder Getriebe mit dem Bearbeitungswerkzeug zu verbinden. Für die Übertragung der Antriebsbewegung des Antriebsmotors ist bevorzugt ein Riementrieb vorgesehen. Dieser Riementrieb weist beispielsweise einen Treibriemen auf, der die Drehbewegung des Antriebsmotors auf das Bearbeitungswerkzeug über entsprechende Riemenscheiben überträgt.

Eine Variante der Erfindung sieht vor, dass die Lagerung für das Bearbeitungswerkzeug an einem Tragarm vorgesehen ist. Dadurch gelingt es, die Konsole in ihren Ausmaßen relativ klein zu halten, zum Beispiel auf die Verschwenkeinrichtung zu minimieren.

Ein weiterer Aspekt der erfindungsgemäßen Holzbearbeitungsmaschine ist dadurch angegeben, dass als Vorritzträger eine Vorritzkonsole vorgesehen ist. Analog wie beim Hauptaggregat zeichnet sich eine Konsole durch universelle Anbringungsmöglichkeiten des gesamten Vorritzträgers mit seinen Maschinenelementen aus. Der als Vorritzkonsole ausgebildete Vorritzträger lässt sich auch dann in entsprechenden Führungen für den Verschwenkvorgang relativ einfach und genau führen.

Selbstverständlich ist es nach der Erfindung auch möglich, dass an der Vorritzkonsole ein weiterer Antriebsmotor für das Vorritzwerkzeug angeordnet ist. Dieser Motor kann aber ähnlich wie beim Hauptaggregat bereits beschrieben, über entsprechende Kraftübertragungseinrichtungen auch anderweitig gelagert werden, wenn eine Übertragung der Drehbewegung des weiteren Antriebsmotors auf das Vorritzwerkzeug über entsprechende Getriebe auch bei der Verschwenkung möglich ist.

Bevorzugt erfolgt die Übertragung der Antriebsbewegung des Antriebsmotors für das Vorritzwerkzeug, beispielsweise über einen zweiten Treibriemen, ebenfalls über einen Riementrieb.

Im Stand der Technik ist es bekannt, daß sich gegensinnig drehende Sägeblätter, nämlich Vorritzwerkzeug und Bearbeitungswerkzeug, wechselseitig im Einsatz sind, das heißt, daß in der Regel nur ein Sägewerkzeug zum Einsatz kommt. Bei der Erfindung sind allerdings regelmäßig beide Sägeblätter, nämlich Vorritzwerkzeug und Bearbeitungswerkzeug im Einsatz.

Selbstverständlich ist die Vorritzkonsole, wie bereits erwähnt, schwenkbar ausgebildet, um den notwendigen Schwenkvorgang des Bearbeitungswerkzeuges für das Vorritzwerkzeug nachzuvollziehen. Dabei werden die Verschwenkbewegungen selbstverständlich synchron ausgeführt. Bevorzugt ist dabei die Vorritzkonsole zumindest einseitig in einer Schwenkführung geführt.

Die erfindungsgemäße Holzbearbeitungsmaschine ist auch dadurch gekennzeichnet, dass die Schwenkführung aus wenigstens einem Schwenksegment, bevorzugt jedoch aus zwei Schwenksegmenten gebildet ist. Innerhalb dieser Schwenksegmente lässt sich die Vorritzkonsole problemlos verschwenken.

Von Vorteil ist es auch, wenn die erfindungsgemäße Holzbearbeitungsmaschine zumindest für das Hauptaggregat eine Höhenverstelleinrichtung aufweist. Von Vorteil ist es allerdings, wenn die Höhenverstelleinrichtung auch für das Vorritzaggregat vorgesehen ist und/oder die Höhenverstelleinrichtung bezüglich des Hauptaggregats zum Vorritzträger miteinander gekoppelt sind. Damit wird nicht nur die Verschwenkbewegung vom Hauptaggregat auf den Vorritzträger abgeleitet, sondern auch die Höhenverstellung. Selbstverständlich ist es auch möglich, die Höhenverstellung für Vorritzträger und Hauptaggregat unabhängig voneinander zu gestalten. In einem solchen Fall ist es dann allerdings günstig, wenn die beiden Höhenverstelleinrichtungen miteinander synchronisiert sind, derart, dass immer eine ausreichend tiefe Vorritznute erzeugt wird.

Die erfindungsgemäße Holzbearbeitungsmaschine zeichnet sich auch dadurch aus, dass sich das Bearbeitungswerkzeug und das Vorritzwerkzeug in entgegengesetzter Drehrichtung bewegt. Dabei ist es weiterhin vorgesehen, dass die erfindungsgemäße Holzbearbeitungsmaschine als Kreissäge ausgebildet ist und als Bearbeitungswerkzeug ein Sägeblatt und als Vorritzwerkzeug ein Vorritzsägeblatt vorgesehen sind. Dabei kann jede Art von Bearbeitungswerkzeug beziehungsweise Vorritzwerkzeug eingesetzt werden. Die Erfindung ist hier auf eine bestimmte Ausführung der Bearbeitungs- beziehungsweise Vorritzwerkzeuge nicht eingeschränkt.

Die Kupplung der erfindungsgemäßen Holzbearbeitungsmaschine zwischen dem Bearbeitungswerkzeug und dem Vorritzwerkzeug ist bevorzugt als Hebelmechanik ausgebildet. Es ist selbstverständlich von der Erfindung auch umfasst, wenn eine andere mechanische und/oder elektrische beziehungsweise elektronische Lösung für die Kupplung des Bearbeitungswerkzeuges und des Vorritzwerkzeuges beziehungweise der jeweiligen Aggregate oder Träger, auf denen sie befestigt sind, vorgesehen ist.

So ist es weiterhin nach der Erfindung vorgesehen, dass eine Kupplung mit Kupplungsscheiben, welche aus- beziehungsweise einkuppelbar ist, mit entsprechenden Verbindungsmitteln zu den Verschwenkeinrichtungen vorgesehen ist.

Es ist weiterhin möglich, dass die Kupplung durch zwei getrennte Antriebe, die allerdings elektronisch miteinander gekoppelt sind, angegeben ist.

Die Holzbearbeitungsmaschine nach der Erfindung zeichnet sich in einer Weiterbildung auch dadurch aus, dass die Verschwenkachse gleich zur Verschwenkrichtung oder der Verbindungslinie der beiden in Schneidrichtung hintereinander angeordneten Werkzeuge, Bearbeitungswerkzeug und Vorritzwerkzeug, ist.

Des Weiteren wird die erfindungsgemäße Aufgabe durch eine Holzbearbeitungsmaschine gelöst, welche wenigstens ein Bearbeitungswerkzeug aufweist, wobei das Bearbeitungswerkzeug durch eine Verschwenkeinrichtung verschwenkbar ist, wobei eine nur einseitige Lagerung der Schwenkeinrichtung erfindungsgemäß vorgeschlagen ist.

Üblicherweise wird das Bearbeitungswerkzeug in einer wannenartigen Konsole in zwei Lagerungen geführt und gehalten, wobei sich das Bearbeitungswerkzeug und die dadurch entstehende Masse zwischen den beiden Lagern befindet.

Erfindungsgemäß wurde aber entdeckt, dass es auf diese verhältnismäßig aufwendige Lagerung nicht ankommt, die, wie oben beschrieben, erheblichen Einstellaufwand bedarf.

Vielmehr erreicht der vorgenannte, erfindungsgemäße Vorschlag eine erhebliche Kostenreduktion, da gefunden wurde, dass es ausreicht, das Bearbeitungswerkzeug, gegebenenfalls mit daran vorgesehenem Hauptaggregat, mit nur einer Lagerung auszustatten, wodurch naturgemäß das Bearbeitungswerkzeug bezüglich der Lagerfläche hervorkragt und ein entsprechendes Kippmoment erzeugen kann. Günstigerweise wird dann das Lager der Verschwenkeinrichtung etwas stabiler ausgeführt, um dieses aufzunehmen.

Neben der einfacheren Konstruktion und dem damit verbundenen geringen Aufwand für die Lagerung, ist es aber auch möglich, mit dem jetzt vorgestellten Konzept, beide Varianten der Erfindung in einer Konstruktion zu realisieren. Da die Verschwenkeinrichtung des Ritzwerkzeuges sowieso separat ausgeführt wird, ist der Grundtyp der erfindungsgemäßen Holzbearbeitungsmaschine wie beschrieben gekennzeichnet, nämlich mit einer nur einseitigen Lagerung der Schwenkeinrichtung des Bearbeitungswerkzeuges. Optional kann dann das Vorritzaggregat entsprechend angeschlossen werden und dann, wie ebenfalls erfindungsgemäß beschrieben, gekoppelt sein.

Die Erfindung wird nachfolgend anhand eines einzigen Ausführungsbeispiels beschrieben. Es wird bereits jetzt betont, dass die Erfindung auf dieses Ausführungsbeispiel nicht eingeschränkt ist. Vielmehr soll lediglich die Funktionsweise der Erfindung an diesem Beispiel erläutert werden.

Es zeigt:

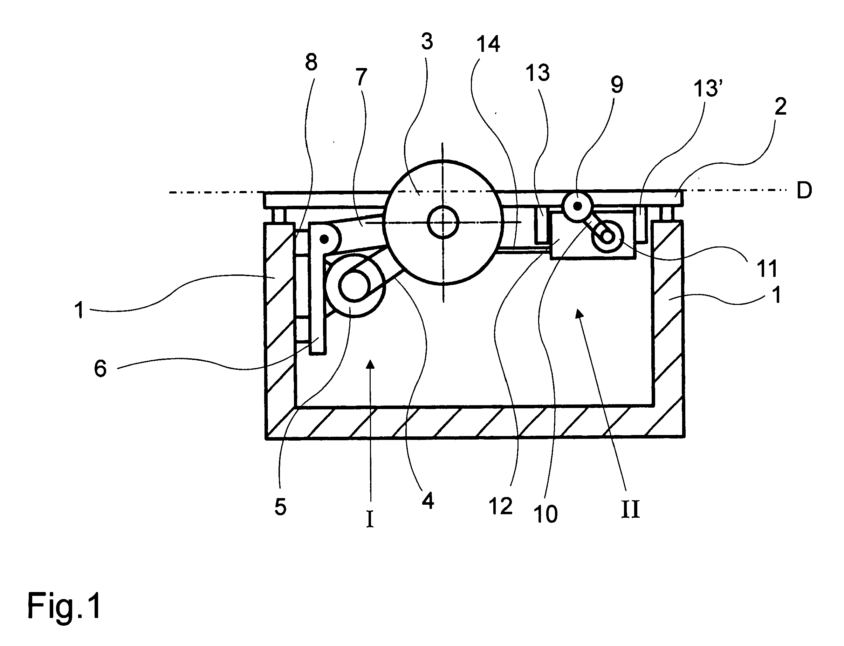

- Fig. 1: eine schematische Darstellung eines Details einer Holzbearbeitungsmaschine nach der Erfindung in einer seitlichen Schnittdarstellung.

Die Holzbearbeitungsmaschine ist dabei lediglich in einem Ausschnitt beziehungsweise Detail dargestellt und zwar in einem Ausschnitt, in dem das Bearbeitungswerkzeug 3 und das Vorritzwerkzeug 9 mit ihren jeweils schematisch dargestellten Hauptaggregat I beziehungsweise dem Vorritzträger II ersichtlich sind. Die gesamte Technik, die für die Darstellung der Erfindung notwendig ist, ist in einem Gestell beziehungsweise Ständer 1 angeordnet. Das Bearbeitungswerkzeug ist dabei an einem Hauptaggregat I angeordnet. Das Hauptaggregat I enthält dabei einen Tragarm 7 sowie eine Schwenkkonsole 6. Des Weiteren ist nur beispielhaft eine Schwenkführung 8 angedeutet, die ebenfalls zu dem Hauptaggregat I gehört.

Der Antriebsmotor für das Bearbeitungswerkzeug 3 trägt das Bezugszeichen 5 und der erste Treibriemen, welcher die Drehbewegung von dem Antriebsmotor auf das Bearbeitungswerkzeug 3 überträgt, ist mit dem Bezugszeichen 4 bezeichnet. Auf der rechten Seite der Darstellung befindet sich der Vorritzträger II. An dem Vorritzträger II ist, wie bereits erwähnt, das Vorritzwerkzeug 9 angeordnet. Dieses Vorritzwerkzeug 9 wird von einem weiteren Antriebsmotor 11 angetrieben. Die Drehbewegung wird dabei über den zweiten Treibriemen 10 übertragen. Mit dem Bezugszeichen 12 ist die Vorritzkonsole abgebildet, die einen wesentlichen Bestandteil des Vorritzträgers II bildet.

Nur beispielhaft beziehungsweise schematisch ist ebenfalls angedeutet, dass die Vorritzkonsole 12 in Schwenksegmenten 13 und 13' gelagert ist. Dabei ist es nach der Erfindung nicht unbedingt erforderlich, dass zwei Schwenksegmente die Schwenkführung bilden. Vielmehr ist es auch möglich, den Vorritzträger nur einseitig zu lagern. Wie ersichtlich sind Bearbeitungswerkzeug 3 und Vorritzwerkzeug 9 an einer Verschwenkachse D vorgesehen, die in diesem Fall in der Oberfläche des Maschinentisches 2 vorgesehen ist. Der Maschinentisch 2 beziehungsweise dessen Oberfläche bildet gleichzeitig die Auflageebene für das zu bearbeitende Werkstück. Dabei ist es nach der Erfindung sowohl möglich, dass das Werkstück gegen das Bearbeitungswerkzeug 3 bewegt wird oder aber dass sich das gesamte Sägeaggregat unterhalb des Maschinentisches 2 bewegt. Die Erfindung ist hier auf eine der beiden Varianten nicht eingeschränkt.

Zwischen dem Hauptaggregat I beziehungsweise der Schwenkkonsole 6 und dem Vorritzträger II beziehungsweise der Vorritzkonsole 12 ist schematisch eine Kupplung 14 angedeutet, mittels derer zumindest die Verschwenkbewegung des Hauptaggregates I auf den Vorritzträger II übertragen wird. Dabei ist es möglich, die Kupplung 14 unterschiedlich auszuführen. Eine Variante davon ist eine mechanisch feste Kupplung. Des Weiteren ist es aber auch möglich, Bowdenzüge vorzusehen, mittels derer die Verbindung hergestellt wird. Die Erfindung umfasst, wie bereits weiter vorn beschrieben, auch eine Lösung, die Kupplung durch eine Elektronik herzustellen und beide verschwenkbaren Elemente, nämlich das Hauptaggregat und den Vorritzträger dann elektronisch derart zu koppeln, dass zwei Verschwenkantriebe sozusagen synchron eine Verschwenkbewegung vornehmen.

Beim Schwenken des Bearbeitungswerkzeuges 3 um die Verschwenkachse D bewirkt die Kupplung 14 zwischen dem Hauptaggregat I und dem Vorritzträger II ein Mitschwenken des Vorritzträgers II. Durch die Kupplung 14 ist ein nur geringfügiges Spiel und damit ein geringfügig unterschiedlicher Schwenkwinkel von dem Hauptaggregat I und zu dem Vorritzträger II unumgänglich, was jedoch durch die sehr geringe Eindringtiefe des Vorritzwerkzeuges 9 in das zu bearbeitende Werkstück in der Praxis unbedeutend bleibt. Diese geringen Unterschiede können demnach akzeptiert werden. Des Weiteren sind nicht dargestellte Mittel zur Höhenverstellung des Bearbeitungswerkzeuges 3 sowie des Vorritzwerkzeuges 9 selbstverständlich an der Holzbearbeitungsmaschine nach der Erfindung vorgesehen.

Des Weiteren sind auch nicht dargestellte Absaugvorrichtungen und notwendige Sicherheitseinrichtungen wie Abdeckhauben oder dergleichen an der Holzbearbeitungsmaschine nach der Erfindung wie üblich anzuordnen. Selbstverständlich kann das Hauptaggregat I auch am Maschinentisch 2 aufgehängt werden. Die in dem Ausführungsbeispiel jedoch vorgestellte einseitige Lagerung in einer Schwenkführung 8 am Gestell beziehungsweise an einem steifen Ständer 1 zeichnet sich durch eine einfache und gleichzeitig exakte Einstellbarkeit bei gleichzeitig direkter Ableitung der im Sägeprozess entstehenden Vibrationen in den Ständer 1 aus und ist daher besonders vorteilhaft.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Holzbearbeitungsmaschine, insbesondere Kreissäge, mit wenigstens einem Bearbeitungswerkzeug und wenigstens einem Vorritzwerkzeug, wobei Bearbeitungswerkzeug und Vorritzwerkzeug gegenüber einer Auflageebene für das zu bearbeitende Werkstück verschwenkbar sind, **dadurch gekennzeichnet, dass** Bearbeitungswerkzeug (3) und Vorritzwerkzeug (9) unabhängig voneinander gelagert sind.

2. Holzbearbeitungsmaschine, insbesondere Kreissäge, mit wenigstens einem Bearbeitungswerkzeug, wobei das Bearbeitungswerkzeug durch eine Verschwenkeinrichtung verschwenkbar ist, **gekennzeichnet durch** eine nur einseitige Lagerung der Schwenkeinrichtung.

3. Holzbearbeitungsmaschine nach einem oder beiden der vorhergehenden Ansprüche, **dadurch gekennzeichnet, dass** das Bearbeitungswerkzeug (3) und das Vorritzwerkzeug (9) je eine eigene Verschwenkeinrichtung aufweisen und/oder die Verschwenkeinrichtungen des Bearbeitungswerkzeuges (3) und des Vorritzwerkzeuges (9) miteinander gekoppelt sind.

4. Holzbearbeitungsmaschine nach einem oder mehreren der vorhergehenden Ansprüche, **dadurch gekennzeichnet, dass** das Bearbeitungswerkzeug (3) an einem Hauptaggregat (I) und/oder das Vorritzwerkzeug (9) an einem Vorritzträger (II) vorgesehen sind und/oder Hauptaggregat (I) und der Vorritzträger (II) unabhängig voneinander aufgehängt sind.

5. Holzbearbeitungsmaschine nach einem oder mehreren der vorhergehenden Ansprüche, **dadurch gekennzeichnet, dass** Vorritzträger (II) und Hauptaggregat (I) bzw. Bearbeitungswerkzeug (3) und Vorritzwerkzeug (9) zur Übertragung von Verstell- bzw. Verschwenkbewegungen vorzugsweise über eine Kupplung (14) miteinander gekoppelt sind und/oder Vorritzträger (II) beziehungsweise Hauptaggregat (I) in einem Ständer (1), Maschinengestell oder dergleichen angeordnet sind.

6. Holzbearbeitungsmaschine nach einem oder mehreren der vorhergehenden Ansprüche, **dadurch gekennzeichnet, dass** das Hauptaggregat (I) an einer Schwenkvorrichtung, vorzugsweise an einer Schwenkkonsole (6) angeordnet ist und/oder die Schwenkkonsole (6) in dem Ständer (1) in wenigstens einer Schwenkführung (8) angeordnet ist.

7. Holzbearbeitungsmaschine nach einem oder mehreren der vorhergehenden Ansprüche, **dadurch gekennzeichnet, dass** das Hauptaggregat (I) um eine in der Oberfläche der Auflageebene liegende Verschwenkachse (D) schwenkbar ist und/oder die Auflageebene durch einen Maschinentisch (2) angegeben ist und/oder für den Antrieb des Bearbeitungswerkzeugs (3) ein Antriebsmotor (5) vorgesehen ist.

8. Holzbearbeitungsmaschine nach einem oder mehreren der vorhergehenden Ansprüche, **dadurch gekennzeichnet, dass** die Übertragung der Antriebsbewegung des Antriebsmotors (5) über einen Riementrieb, vorzugsweise einen ersten Treibriemen (4) auf das Bearbeitungswerkzeug (3) erfolgt und/oder die Lagerung für das Bearbeitungswerkzeug (3) an einem Tragarm (7) vorgesehen ist und/oder als Vorritzträger (II) eine Vorritzkonsole (12) vorgesehen ist.

9. Holzbearbeitungsmaschine nach einem oder mehreren der vorhergehenden Ansprüche, **dadurch gekennzeichnet, dass** an der Vorritzkonsole (12) ein weiterer Antriebsmotor (11) für das Vorritzwerkzeug (9) angeordnet ist und/oder die Übertragung der Antriebsbewegung des weiteren Antriebsmotors (11) über einen Riementrieb, zum Beispiel einen zweiten Treibriemen (10) auf das Vorritzwerkzeug (9) erfolgt.

10. Holzbearbeitungsmaschine nach einem oder mehreren der vorhergehenden Ansprüche, **dadurch gekennzeichnet, dass** die Vorritzkonsole (12) schwenkbar ausgebildet ist und/oder die Vorritzkonsole (12) zumindest einseitig in einer Schwenkführung geführt ist.

11. Holzbearbeitungsmaschine nach einem oder mehreren der vorhergehenden Ansprüche, **dadurch gekennzeichnet, dass** die Schwenkführung aus wenigstens einem Schwenksegment (13), bevorzugt aus zwei Schwenksegmenten (13, 13') gebildet ist und/oder eine Höhenverstelleinrichtung zumindest für das Hauptaggregat (I) vorgesehen ist und/oder Hauptaggregat (I) und Vorritzträger (II) auch bezüglich der Höhenverstellung miteinander gekoppelt sind.

12. Holzbearbeitungsmaschine nach einem oder mehreren der vorhergehenden Ansprüche, **dadurch gekennzeichnet, dass** sich das Bearbeitungswerkzeug (3) und das Vorritzwerkzeug (9) in entgegengesetzter Drehrichtung bewegen und/oder als Bearbeitungswerkzeug (3) ein Sägeblatt und als Vorritzwerkzeug (9) ein Vorritzsägeblatt vorgesehen sind und/oder Vorritzwerkzeug (9) und Bearbeitungswerkzeug (3) gemeinsam eingesetzt bzw. gemeinsam in eine Drehbewegung versetzt werden.

13. Holzbearbeitungsmaschine nach einem oder mehreren der vorhergehenden Ansprüche, **dadurch gekennzeichnet, dass** die Kupplung (14) zwischen Bearbeitungswerkzeug (3) und Vorritzwerkzeug (9) als Hebelmechanik und/oder als Bowdenzug und/oder eine ein- beziehungsweise auskuppelbare Kupplungsscheibe mit Verbindungsmitteln zu den Verschwenkeinrichtungen ausgebildet ist.

14. Holzbearbeitungsmaschine nach einem oder mehreren der vorhergehenden Ansprüche, **dadurch gekennzeichnet, dass** die Kupplung (14) durch zwei getrennte Antriebe, die elektronisch miteinander gekoppelt sind, angegeben ist.

15. Holzbearbeitungsmaschine nach einem oder mehreren der vorhergehenden Ansprüche, **dadurch gekennzeichnet, dass** die Verschwenkachse (D) gleich zur Verschwenkrichtung oder der Verbindungslinie der beiden in Schneidrichtung hintereinander angeordneten Werkzeuge, Bearbeitswerkzeug (3) und Vorritzwerkzeug (9), ist.
